(19)

Europäisches
Patentamt
European
Patent Office
Office européen
des brevets

(11) **EP 2 292 694 A1**

(12) **EUROPEAN PATENT APPLICATION**
published in accordance with Art. 153(4) EPC

(43) Date of publication:
**09.03.2011 Bulletin 2011/10**

(21) Application number: **09766571.5**

(22) Date of filing: **10.06.2009**

(51) Int Cl.:
*C08L 69/00* *(2006.01)*   *C08K 5/17* *(2006.01)*
*C08L 23/00* *(2006.01)*   *C08L 23/10* *(2006.01)*

(86) International application number:
**PCT/JP2009/060639**

(87) International publication number:
**WO 2009/154123 (23.12.2009 Gazette 2009/52)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **17.06.2008 JP 2008158393**

(71) Applicant: **Idemitsu Kosan Co., Ltd.**
**Chiyoda-ku**
**Tokyo 100-8321 (JP)**

(72) Inventors:
• **NOMURA, Manabu**
  **Ichihara-shi**
  **Chiba 299-0193 (JP)**
• **KANNO, Susumu**
  **Ichihara-shi**
  **Chiba 299-0193 (JP)**

(74) Representative: **Gille Hrabal Struck Neidlein Prop
Roos**
**Patentanwälte**
**Brucknerstrasse 20**
**40593 Düsseldorf (DE)**

(54) **POLYCARBONATE RESIN COMPOSITION AND MOLDED BODY OF THE SAME**

(57)     Disclosed is a polycarbonate resin composition composed of a melt kneaded mixture containing a resin component comprising (A) from 50 to 94 % by mass of an aromatic polycarbonate resin having a viscosity average molecular weight of from 16, 000 to 26,000, (B) from 1 to 15 % by mass of a polyolefin-based resin and/or a polyolefin-based elastomer containing from 3 to 30 % by mass of an epoxy group or a glycidyl group and (C) from 5 to 40 % by mass of a polypropylene-based resin produced by a slurry polymerization method; and (D) from 0.001 to 1 part by mass, based on 100 parts by mass of the resin component, of at least one member selected from the group consisting of an aliphatic amine salt, an aromatic amine salt, an ammonium hydroxide and a hydroxylammonium salt. The polycarbonate resin composition is excellent in impact resistance, bending strength, fluidity, chemical resistance and so on, does not suffer from lamellar separation after molding and is able to achieve low gloss. A molded body of the same is also disclosed.

## Description

[Technical Field]

The present invention relates to a polycarbonate resin composition and to a molded body of the same. In more detail, the present invention relates to a polycarbonate resin composition which does not suffer from lamellar separation after molding, is excellent in impact resistance, bending strength, fluidity, chemical resistance and so on and is useful as a housing for automobile parts, electronic instruments, information instruments and so on and to a molded body of the same.

[Background Art]

Though filler-filled polypropylene is frequently used as automobile parts, there is involved such a problem that the filler-filled polypropylene is not so good in scratch whitening resistance, emboss transferability and weld appearance, and the like. Meanwhile, though polycarbonate (PC) has such an advantage that it is excellent in mechanical physical properties including impact strength, there is involved such a drawback that the polycarbonate is not so good in fluidity and chemical resistance.

As techniques for improving this, there are proposed a PC/ABS alloy as to the fluidity and a PC/polyester (PBT or PET) alloy as to the chemical resistance. However, the PC/ABS alloy is not so good in chemical resistance and weather resistance and excessively high in gloss (luster), cannot be used as an interior material as it is, requires painting and suffers from an increase in costs, and therefore, its use is limited. Furthermore, the PC/polyester (PBT or PET) alloy involved such problems that it is low in an effect for improving the fluidity, not so good in resistance to hydrolysis, high in gloss and difficult to realize low gloss. All of the PC/ABS alloy and the PC/polyester (PBT or PET) alloy also had such a drawback that a creak is high.

Then, an alloy of PC and a polyolefin resin, especially an alloy of polypropylene (PP) and PC, is expected as a combination of materials capable of overcoming these problems. However, there were involved such serious problems that this alloy is difficult for achieving compatibilization, so that its surface impact is weak, and the layer separation is generated in injection molded articles. Thus, it was difficult to put such an alloy into practical use.

For example, Patent Document 1 proposes the use of epoxy-modified SEBS as a compatibilizing agent for PP and PC. However, PP and PC do not have a functional group, and according to this method, it is difficult to enhance the tensile elongation and to prevent the layer separation from occurring.

Patent Document 2 proposes the use of PC having a terminal aliphatic OH group and epoxy group-containing PP as a compatibilizing agent for PP and PC at the time of melt kneading. However, a molecular weight of the epoxy group-containing PP is low, an effect for improving the elongation or impact strength is limited, orientation is promoted at the time of molding, and separation is caused due to severe folding or the like.

Patent Document 3 proposes the use of PC having a terminal aliphatic OH group and carboxyl group-containing PP as a compatibilizing agent for PP and PC at the time of melt kneading. However, its reaction effect is not sufficient, and effects for improving the elongation and preventing the layer separation from occurring are small.

Patent Document 4 proposes the use of SEBS as a compatibilizing agent for PP and PC. However, SEBS is also low in compatibility with PC, and according to this method, it is difficult to enhance the tensile elongation and to prevent the layer separation from occurring.

Patent Document 5 proposes that OH-terminated PC and an ethylene-glycidyl methacrylate (GMA) copolymer are melt kneaded, thereby improving the low temperature impact resistance. However, according to this method, an improvement of the fluidity cannot be substantially expected. Furthermore, a combination with PP is not taken into consideration at all.

Patent Document 6 discloses a resin modifier obtained by allowing an acid anhydride-modified polyolefin (PO) and OR-terminated PC to react and proposes that the present modifier can also be used as a compatibilizing agent for PP and PC. However, in fact, an effect as the modifier for PC and PP is not shown, the reaction between the acid anhydride-modified PO and OH is not sufficient, and effects for improving the elongation and preventing the layer separation from occurring are small.

[Prior Art Documents]

[Patent Documents]

    [Patent Document 1] JP-A-7-207078
    [Patent Document 2] JP-A-63-215749

[Patent Document 3] JP-B-8-19297
[Patent Document 4] JP-A-2000-17120
[Patent Document 5] JP-A-3-7758
[Patent Document 6] JP-A-3-294333

[Summary of the Invention]

[Problem to be solved by the Invention]

An object of the present invention is to provide a polycarbonate resin composition which compensates such a drawback of an aromatic polycarbonate resin that it is not so good in fluidity and chemical resistance, is excellent in impact resistance, bending strength, fluidity, chemical resistance and so on, does not suffer from lamellar separation after molding and is able to realize low gloss, and a molded body of the same.

[Means for Solving the Problem]

In order to achieve the foregoing object, the present inventors made extensive and intensive investigations. As a result, it has been found that the foregoing object is achieved by a polycarbonate resin composition obtained by blending (A) an aromatic polycarbonate resin having a prescribed molecular weight, (B) a specified polyolefin-based resin and/or a polyolefin-based elastomer, (C) a polypropylene-based resin produced by a slurry polymerization method and (D) at least one member selected from the group consisting of an aliphatic amine salt, an aromatic amine salt, an ammonium hydroxide and a hydroxylammonium salt in a specified proportion, and melt kneading the blend, leading to accomplishment of the present invention.
That is, the present invention is to provide the following polycarbonate resin composition and a molded body of the same.
1. A polycarbonate resin composition comprising a melt kneaded mixture containing a resin component comprising (A) from 50 to 94 % by mass of an aromatic polycarbonate resin having a viscosity average molecular weight of from 16, 000 to 26,000, (B) from 1 to 15 % by mass of a polyolefin-based resin and/or a polyolefin-based elastomer containing from 3 to 30 % by mass of an epoxy group or a glycidyl group and (C) from 5 to 40 % by mass of a polypropylene-based resin produced by a slurry polymerization method; and (D) from 0.001 to 1 part by mass, based on 100 parts by mass of the resin component, of at least one member selected from the group consisting of an aliphatic amine salt, an aromatic amine salt, an ammonium hydroxide and a hydroxylammonium salt.
2. The polycarbonate resin composition as defined in 1, wherein a melt index of the component (C) is from 2 to 40 g/10 min.
3. A molded body obtained by injection molding the polycarbonate resin composition as defined in 1 or 2.
4. The molded body as defined in 3, which is useful for automobile parts.

[Effect of the Invention]

According to the present invention, a polycarbonate resin composition which even when an aromatic polycarbonate resin is blended, is excellent in fluidity and chemical resistance and also excellent in impact resistance and bending strength can be provided; and when this is used, a molded body which does not suffer from lamellar separation after molding and is able to realize low gloss can be provided.

[Modes for Currying Out the Invention]

The polycarbonate resin composition of the present invention is one containing (A) an aromatic polycarbonate resin having a prescribed molecular weight, (B) a specified polyolefin-based resin and/or a polyolefin-based elastomer, (C) a polypropylene-based resin produced by a slurry polymerization method and (D) at least one member selected from the group consisting of an aliphatic amine salt, an aromatic amine salt, an ammonium hydroxide and a hydroxylammonium salt.

[(A) Aromatic polycarbonate resin]

The aromatic polycarbonate resin (A) in the present invention is not particularly limited so far as it has a viscosity average molecular weight of from 16,000 to 26,000. In general, various aromatic polycarbonates produced by a reaction between a dihydric phenol and a carbonate precursor can be used.

As the dihydric phenol, various materials are exemplified. In particular, 2,2-bis(4-hydroxyphenyl)propane [bisphenol A], bis(4-hydroxyphenyl)methane, 1,1-bis(4-hydroxyphenyl)ethane, 2, 2-bis (4-hydroxy-3,5-dimethylphenyl) propane, 4,4'-dihydroxydiphenyl, bis(4-hydroxyphenyl)cycloalkanes, bis (4-hydraxyghenyl) ether, bis(4-hydroxyphenyl) sulfide, bis(4-hydroxyphenyl) sulfone, bis(4-hydroxyphenyl) sulfoxide, bis(4-hydroxyphenyl) ketone and so on are exemplified. These dihydric phenols may be used singly or in admixture of two or more kinds thereof.
In particular, the dihydric phenol is preferably a bis(hydroxyphenyl)alkane, and especially preferably bisphenol A or a compound composed of bisphenol A as a main raw material.

Examples of the carbonate precursor include carbonyl halides, carbonyl esters, haloformates and so on. Specific examples thereof include phosgene, dihaloformates of a dihydric phenol, diphenyl carbonate, dimethyl carbonate, diethyl carbonate and so on.

Furthermore, the aromatic polycarbonate may have a branched structure. Examples of a branching agent include 1,1, 1-tris (4-hydroxyphenyl) ethane, $\alpha,\alpha',\alpha''$-tris(4-hydroxyphenyl)-1,3,5-triisopropylbenzene, phloroglycine, trimellitic acid, isatin bis(o-cresol) and so on.

The component (A) in the present invention has a viscosity average molecular weight of from 16,000 to 26,000. When the viscosity average molecular weight of the component (A) is less than 16,000, the tensile elongation percentage and impact resistance are insufficient, and brittle fracture is caused in a high-speed drop weight test or the like. Furthermore, when it exceeds 26,000, the layer separation of a molded body is generated, and the tensile elongation percentage is lowered. The viscosity average molecular weight of the component (A) is preferably from 17,000 to 25,000, and more preferably from 18,000 to 24,000.

In this connection, the viscosity average molecular weight of the component (A) in the present invention is one determined by inserting a specific viscosity ($\eta$sp) of a solution obtained by dissolving about 0.7 g of the aromatic polycarbonate resin in 100 cm$^3$ of methylene chloride at 20°C, as measured using an Ubbelohde's viscometer, into the following expression.

$$(\eta_{sp})/C = [\eta] + 0.45 \times [\eta]^2 C$$

$$[\eta] = 1.23 \times 10^{-5} M^{0.83}$$

(Here, [$\eta$] is a limited viscosity, and C is a polymer concentration.)

A blending amount of the component (A) in the present invention is from 50 to 94 % by mass in a total amount of the components (A) to (C) . When the blending amount of the component (A) is less than 50 % by mass, the tensile strength and elastic modulus and so on are lowered, whereas when it exceeds 94 % by mass, effects for improving the fluidity and chemical resistance and so on are insufficient. The blending amount of the component (A) is preferably from 55 to 92 % by mass, and more preferably from 60 to 88 % by mass.

[(B) Polyolefin-based resin or polyolefin-based elastomer]

The pblyolefin-based resin and/or polyolefin-based elastomer (B) in the present invention is one containing from 3 to 30 % by mass of an epoxy group or a glycidyl group.

The polyolefin-based resin in the component (B) may be, for example, a homopolymer having an epoxy group or a glycidyl group or a copolymer of an olefin and an unsaturated monomer having an epoxy group or a glycidyl group, or may be a resin obtained by copolymerizing an olefin polymer with an unsaturated monomer having an epoxy group or a glycidyl group; and the copolymer may be a graft copolymer, a random copolymer or a block copolymer.
Furthermore, for example, the polyolefin-based resin may be a resin in which an epoxy group is introduced by oxidizing a terminal of an olefin polymer, or an unsaturated bond existing in a copolymer of an olefin and other unsaturated monomer or the like and a complex thereof, with hydrogen peroxide or an organic peroxide, for example, peroxybenzoic acid, peroxyformic acid, peroxyacetic acid, etc. That is, any resin in which an epoxy group or a glycidyl group is introduced into an olefin-based polymer may be useful.
The polyolefin-based elastomer in the component (B) as referred to herein is a lowly crystalline or amorphous olefin-based copolymer containing an epoxy group or a glycidyl group and having a degree of crystallinity, as measured by an X-ray diffraction method, of not more than 50 %.

Examples of the olefin include ethylene, propylene, 1-butene, isobutylene, 2-butene, cyclobutene, 1-pentene, 1-hexene, 4-methyl-1-pentene, 1-octane, 3-methyl-1-but 4-methyl-1-butene, cyclopentene, 1-hexene, cyclohexene, 1-octene, 1-decene, 1-dodecene and so on. These may be used singly or in combinations of two or more kinds thereof.

Examples of the unsaturated monomer having an epoxy group or a glycidyl group include glycidyl acrylate, glycidyl methacrylate, vinyl glycidyl ether, allyl glycidyl ether, methacryl glycidyl ether, 2-methylallyl glycidyl ether, styrene-p-glycidyl ether, glycidyl cinnamate, glycidyl itaconate, N-[4-(2,3-epoxypropoxy)-3,5-dimethylbenzyl] methacrylamide and so on. These may be used singly or in combinations of two or more kinds thereof.

A content of the epoxy group or glycidyl group in the component (B) is from 3 to 30 % by mass. When the content of the epoxy group or glycidyl group in the component (B) is less than 3 % by mass, an effect for improving the compatibility between the component (A) and the component (C) is not revealed, the tensile elongation percentage and impact resistance are lowered, and moreover, the layer separation of a molded body is generated. Furthermore, when it exceeds 30 % by mass, there is a concern that self-crosslinking occurs, the tensile elongation percentage and impact resistance are lowered, and moreover, the layer separation of a molded body is generated. The content of the epoxy group or glycidyl group in the component (B) is preferably from 4 to 25 % by mass, and more preferably from 5 to 20% by mass.

A weight average molecular weight of the component (B) is preferably from about 50,000 to 500,000. So far as the weight average molecular weight of the component (B) falls within this range, not only the layer separation can be prevented from occurring, but favorable tensile elongation and high impact resistance can be obtained. In this connection, the weight average molecular weight can be determined by adopting a gel permeation chromatography (GPC) method.

In the present invention, as the component (B), at least one polyolefin-based resin having an epoxy group or a glycidyl group may be used; at least one polyolefin-based elastomer having an epoxy group or a glycidyl group may be used; or the foregoing at least one polyolefin-based resin and the foregoing at least one polyolefin-based elastomer may be used jointly.

A blending amount of the component (B) in the present invention is from 1 to 15 % by mass in a total amount of the components (A) to (C). When the blending amount of the component (B) is less than 1 % by mass, it may not be said that an improvement of the compatibility between the component (A) and the component (C) is sufficient, the tensile elongation percentage and impact resistance are lowered, and moreover, the layer separation of a molded body is generated. When it exceeds 15 % by mass, self-crosslinking is easy to occur, the tensile strength and elastic modulus are greatly lowered, and the fluidity becomes worse. The blending amount of the component (B) is preferably from 2 to 13 % by mass, and more preferably from 3 to 10 % by mass.

[(c) Polypropylene-based resin]

The polypropylene-based resin (C) in the present invention is one produced by a slurry polymerization method. The component (C) may be a polymer obtained by polymerizing propylene singly, or may be a copolymer composed mainly of propylene. For example, the component (C) may be an isotactic propylene homopolymer or a syndiotactic propylene homopolymer. Furthermore, examples of the copolymer include a copolymer of propylene and ethylene, and the copolymer may be any of a graft copolymer, a random copolymer or a block copolymer.

In the present invention, as a polymerization method of the component (C), a flurry polymerization method is adopted. In the case of using the component (C) produced by other polymerization method than the slurry polymerization method, for example, a vapor phase polymerization method, the molecular weight of PC is lowered, and the tensile elongation percentage and impact resistance become low.

As to a condition of the slurry polymerization method, in general, a Ziegler catalyst is used as a catalyst; a polymerization temperature is from about 30 to 90°C; a polymerization time is from about 30 minutes to 10 hours; and a reaction pressure is from about atmospheric pressure 0.1 to 1 MPa.

In the case of using a polymerization solvent, for example, aromatic hydrocarbons, alicyclic hydrocarbons, aliphatic hydrocarbons, halogenated hydrocarbons and so on can be used. These solvents may be used singly or in combinations of two or more kinds thereof.

In the present invention, it is preferable that the component (C) has a melt index (MI) of from about 2 to 40 g/10 min at a resin temperature under the measurement condition of 230 °C under a load of 21.18 N. So far as the MI is 2 g/10 min or more, an effect for improving the fluidity can be sufficiently revealed, and so far as the MT is not more than 40 g/10 min, the layer separation of a molded body is hardly generated. The MI is more preferably from 3 to 30 g/10 min. In this connection, the MI is one determined by a measurement method in conformity with ASTM D1238.

In the present invention, as the component (C), one kind of the foregoing propylene-based polymers may be used, or two or more kinds thereof may be used in combinations.

A blending amount of the component (C) in the present invention is from 5 to 40 % by mass in a total amount of the components (A) to (C). When the blending amount of the component (C) is less than 5 % by mass, effects for improving the fluidity and chemical resistance cannot be sufficiently revealed, whereas when it exceeds 40% by mass, the tensile elongation percentage and impact resistance are lowered, and moreover, the layer separation of a molded body is easily generated. The MI is preferably from 7 to 35 % by mass, and more preferably from 10 to 30 % by mass.

[(D) Aliphatic amine salt, aromatic amine salt, ammonium hydroxide and hydroxylammonium salt]

The component (D) in the present invention is at least one member selected from the group consisting of an aliphatic amine salt, an aromatic amine salt, an ammonium hydroxide and a hydroxylammonium salt. The aliphatic amine salt and the aromatic amine salt can be, for example, represented by a general formula: $R^1R^2R^3N\cdot 1/nA^1$; and when the component (D) is an aliphatic amine salt, each of $R^1$ to $R^3$ independently represents a hydrogen atom or an aliphatic group (provided that all of $R^1$ to $R^3$ are not a hydrogen atom at the same time). When the component (D) is an aromatic amine salt, each of $R^1$ to $R^3$ independently represents a hydrogen atom or an aromatic group (provided that all of $R^1$ to $R^3$ are not a hydrogen atom at the same time) . $A^1$ represents an acid, and examples thereof include hydrochloric acid, sulfuric acid, nitric acid, chloric acid, perchloric acid, acetic acid, a monoalkyl sulfuric acid, a sulfonic acid compound and so on. n is a valence of an anion of the acid $A^1$, and for example, in the case of hydrochloric acid, n is equal to 1, whereas in the case of sulfuric acid, n is equal to 2.

The ammonium hydroxide can be, for example, represented by a general formula: $R^4R^5R^6R^7N^+OH^-$ Each of $R^4$ to $R^7$ independently represents, for example, a hydrogen atom or a linear or branched alkyl group having from 1 to 5 carbon atoms (provided that all of $R^4$ to $R^7$ are not a hydrogen at the same time).

Examples of this ammonium hydroxide include tetramethylammonium hydroxide, tetraethylammonium hydroxide, tetra-n-propylamnionium hydroxide, tetraisopropylammonium hydroxide and so on.

Meanwhile, the hydroxylammonium salt can be, for example, represented by a general formula: $R^8R^9NOH\cdot 1/mA^2$. Each of $R^6$ and $R^9$ independently represents, for example, a hydrogen atom or a linear or branched alkyl group having from 1 to 5 carbon atoms (provided that all of $R^8$ and $R^9$ are not a hydrogen atom at the same time) . $A^2$ represents an acid, and m is a valence of an anion of the acid $A^2$.

Examples of this hydroxylammonium salt include methylhydroxylamine hydrochloride, ethylhydroxylamine hydrochloride, n-propylhydroxylamine hydrochloride, isopropylhydroxylamine hydrochloride, dimethylhydroxylamine hydrochloride and diethylamine hydrochloride; hydroxylamines obtained by substituting hydrochloric acid in the foregoing hydroxylamines with other acid, for example, sulfuric acid, nitric acid, acetic acid, a monoalkyl sulfuric acid, a sulfonic acid compound, etc.; and so on.

In the present invention, as the component (D), one kind of the foregoing nitrogen-containing compounds may be used, or two or more kinds thereof may be used in combinations.

A blending amount of the component (D) in the present invention is from 0.001 to I part by mass based on 100 parts by mass of a total amount of the components (A) to (C) . When the blending amount of the component (D) is less than 0.001 parts by mass, the layer separation of a molded body is easily generated, whereas when it exceeds 1 part by mass, there is a concern that the tensile elongation percentage and impact resistance are lowered. The blending amount of the component (D) is preferably from 0.002 to 0.8 parts by mass, and more preferably from 0.003 to 0.5 parts by mass.

[Additives]

In the polycarbonate resin composition of the present invention, in addition to the foregoing components (A) to (D), various additives can be blended so far as the object of the present invention is not impaired. Examples of the additives include an inorganic additive, an antioxidant, an ultraviolet ray absorber, a light stabilizer, a flame retarder, a flame-retardant aid, a coloring agent, an antistatic agent, an anti-blocking agent, a mold release agent, a lubricant and so On .

[Polycarbonate resin composition and molded body]

The polycarbonate resin composition of the present invention can be obtained by blending the foregoing components (A) to (D) and various additives by the ordinary method and melt kneading the blend. Examples of a melt kneader include a Banbury mixer, a single-screw extruder, a twin-screw extruder, a cokneader, a multi-screw extruder and so on. In general, a heating temperature in melt kneading is suitably from 220 to 300°C.

The polycarbonate resin composition of the present invention can be formed into a molded body by adopting a known molding method, for example, hollow molding, injectionmolding, extrusion molding, vacuum molding, pressure molding, heat bending molding, compression molding, calender molding, rotational molding, etc. In particular, a molding method by injection molding is preferable.

Furthermore, since the polycarbonate resin composition of the present invention is excellent in impact resistance, bending strength, fluidity and chemical resistance, it can be utilized upon injection molding as a housing for automobile parts, electronic instruments or information instruments, in which these characteristics are required, or the like.

That is, the present invention also provides a molded body using the polycarbonate resin composition of the present invention, especially one for automobile parts.

[Examples]

The present invention is described in more detail with reference to the following Examples, but it should be construed that the present invention is not limited thereto at all.

In this connection, in the following, GMA expresses glycidyl methacrylate, and MAH expresses maleic anhydride. Furthermore, MI expresses a melt index.

The components (A) to (D) used in the Examples and Comparative Examples are shown as follows.

(A) Aromatic polycarbonate resin:

   a-1: Viscosity average molecular weight (Mv) = 22,000
   a-2 (comparison): Viscosity average molecular weight (Mv) = 15,000

(B) Polyolefin-based resin or polyolefin-based elastomer:

   b-1: Polypropylene-GMA graft copolymer [GMA content = 8.1% by mass (3.68 % by mass as a glycidyl group)]
   b-2: Ethylene copolymer [GMA content = 12 % by mass (5.46 by mass as a glycidyl group)]
   b-3 (comparison) : Polyethylene-GMA graft copolymer (GMA content = 1.8 % by mass)
   b-4 (comparison): Polypropylene-MAH graft copolymer (MAH content = 5.3 % by mass)

(C) Polypropylene-based resin:

   c-1: Polypropylene block copolymer, MI = 10 g/10 min, by the slurry polymerization method
   c-2: Polypropylene polymer, MI = 4 g/10 min, by the slurry polymerization method
   c-3: Polypropylene block copolymer, MI = 30 g/10 min, by the vapor phase polymerization method

(D) At least one member selected from the group consisting of aliphatic amine salt, aromatic amine salt, ammonium hydroxide and hydroxylammonium salt

   d-1: Tetramethylammonium hydroxide (ammonium hydroxide-based compound, manufactured by Wako Pure Chemical Industries, Ltd.)
   d-2: Cation BB (a trade name for an aliphatic amine salt-based compound, manufactured by NOF Corporation)

(Examples 1 to 5 and Comparative Examples 1 to 7)

After dry blending respective components in a blending proportion shown in each of Tables 1 and 2, the blend was melt kneaded using a twin-screw kneader (TEX44, manufactured by The Japan Steel Works, Ltd.) at a set-up temperature: of 250°C while placing a number of kneading blocks for the purpose of making a residence time long and controlling a discharge amount of the blend, thereby obtaining pellets.

The obtained pellets were dried at 120 °C for 6 hours or more and then subjected to injection molding (injection molding temperature: 270 °C, die temperature: 80°C) to prepare a specimen, followed by evaluating physical properties by the following methods. The obtained results are shown in Tables 1 and 2.

(Evaluation of physical properties)

   (1) Tensile strength, tensile elastic modulus' and tensile elongation percentage (specimen thickness: 3.0 mm)=

      In conformity with JIS K 7162

   (2) Izod impact strength (notched) (specimen thickness: 3-0 mm) :

      In conformity with JIS K 7110

   (3) High-speed drop weight impact test (specimen; flat plate of 70 x 70 x 3 mm) :

      The measurement was conducted using an impact shaft having a radius of 1/2 inch at an impact rate of 7 m/sec.

The case where the broken surface was ductile was evaluated as "O"; and the case where the broken surface was brittle was evaluated as "X",

(4) Surface separation:

The specimen was subjected to 180-degree bending five times, thereby visually observing whether or not a separation phenomenon of the specimen was generated (fine wrinkles are also considered into the separation). The case where the separation was not observed was evaluated as "O"; and the case where the separation was observed even slightly was evaluated as "X",

Tablet 1

| | | | | Example 1 | Comparative Example 1 | Comparative Example 2 | Comparative Example 3 | Comparative Example 4 |
|---|---|---|---|---|---|---|---|---|
| Resin composition | | | | | | | | |
| | (A) | a-1(%)* | Mv: 22,000 | 75 | 75 | - | 75 | 75 |
| | | a-2 (%)* (comparison) | Mv: 15,000 | - | - | 75 | - | - |
| | (B) | b-1(%)* | GMA amount 8.1% by mass | - | - | - | - | - |
| | | b-2 (%)* | GMA amount 12 % by mass | 5 | 5 | 5 | 5 | - |
| | | b-3 (%)* (comparison) | GMA amount: 1.8% by mass | - | - | - | - | 5 |
| | | b-4 (%)* (comparison) | MAH amount: 5.3 % by mass | - | - | - | - | - |
| | (C) | c-1(%)* | MI: 10g/10 min (by the slurry method) | 20 | 20 | 20 | - | 20 |
| | | c-2 (%)* | MI: 4/g10 min (by the slurry method) | - | - | - | - | - |
| | | c-3 (%)* (comparison) | MI: 30g/10min (by the vapor phase polymerization method) | - | - | - | 20 | - |
| | (D) | d-1 (parts)* | TMAH | 0.015 | - | 0.06 | 0.015 | 0.015 |
| | | d-2 (parts)* | Cation BB | - | - | - | - | - |
| Evaluation of physical properties | | | | | | | | |

(continued)

|  | | Example 1 | Comparative Example 1 | Comparative Example 2 | Comparative Example 3 | Comparative Example 4 |
|---|---|---|---|---|---|---|
| | Tensile strength (MPa) | 56 | 44 | 42 | 43 | 44 |
| | Tensile elastic modulus (MPa) | 2020 | 1910 | 1890 | 1910 | 1940 |
| | Tensile elongation percentage (%) | 62 | 9 | 6 | 8 | 13 |
| | Izod impact strength ($kJ/m^2$) | 65 | 12 | 4 | 7 | 11 |
| | High-speed drop weight impact test | O | × | × | × | × |
| | Surface separation | O | × | O | O | × |

(%)* % by mass in a total amount of the components (A) to (C)
(parts)*: parts by mass based on 100 parts by mass of a total amount of the components (A) to (C)
TMAH: Tetramtethylammonium hydroxide

Table 2

| | | | | Example 2 | Example 3 | Comparative Example 5 | Example 4 | Comparative Example 6 | Example 5 | Comparative Example 7 |
|---|---|---|---|---|---|---|---|---|---|---|
| Resin composition | | | | | | | | | | |
| | (A) | a-1(%)* | Mv: 22,000 | 82 | 70 | - | 60 | 45 | 77 | 77 |
| | | a-2 (%)* (comparison) | Mv: 15,000 | - | - | 70 | - | - | - | - |
| | (B) | b-1 (%)* | GMA amount: 8.1% by mass | - | 15 | - | - | 10 | - | - |
| | | b-2 (%)* | GMA amount: 12 % by mass | 3 | - | - | 10 | - | 3 | 3 |
| | | b-3 (%) (comparison) | GMA amount: 1.8 % by mass | - | - | - | - | - | - | - |
| | | b-4 (%) (comparison) | MAH amount: 5.3 % by mass | - | - | 15 | - | - | - | - |
| | (C) | c-1 (%)* | MI: 10g/10 min (by the slurry method) | 15 | 15 | 15 | - | 45 | - | - |
| | | c-2 (%)* | MI: 4 g/10 min (by the slurry method) | - | - | - | 30 | - | 20 | 20 |
| | | c-3 (%)* (comparison) | MI:30g/10 min (by the vapor phase polymerization method) | - | - | - | - | - | - | - |
| | (D) | d-1 (parts)* | TMAH | 0.009 | 0:015 | 0.015 | 0.025 | 0.009 | - | - |
| | | d-2 (parts)* | Cation BB | - | - | - | - | - | 0.3 | 3 |
| Evaluation of physical properties | | | | | | | | | | |

(continued)

| | | Example 2 | Example 3 | Comparative Example 5 | Example 4 | Comparative Example 6 | Example 5 | Comparative Example 7 |
|---|---|---|---|---|---|---|---|---|
| | Tensile strength (MPa) | 61 | 49 | 46 | 47 | 31 | 52 | 45 |
| | Tensile elastic modulus (MPa) | 2140 | 1910 | 1840 | 1830 | 1460 | 2050 | 1930 |
| | Tensile elongation percentage (%) | 68 | 46 | 8 | 41 | 4 | 48 | 6 |
| | Izod impact strength (kJ/m$^2$) | 59 | 41 | 5 | 38 | 3 | 45 | 5 |
| | High-speed drop weight impact test | O | O | × | O | × | O | × |
| | Surface separation | O | O | × | O | × | O | × |

(%)*: % by mass in a total amount of the components (A) to (C)
(parts)*: parts by mass based on 100 parts by mass of a total amount of the components (A) to (C)
TMAH: Tetramethylammonium hydroxide

(Examples 6 and 7)

Each of the compositions of Examples 1 and 2 was colored black by further adding 3, 000 ppm of carbon black (manufactured by Mitsubishi Chemical Corporation) thereto, and pellets were obtained in the same manner as in Example 1. By using these pellets, an embossed flat plate of 140 x 140 x 2 mm was molded by injection molding, thereby preparing a specimen.
The surface of the specimen was subjected to a scratch test under a load of 30 N at a scratch rate of 100 mm/sec using a scratch tester, manufactured by Kato Tech Co., Ltd., thereby evaluating scratch whitening resistance by visual inspection. Furthermore, a hue was evaluated by visual inspection. The evaluation results are shown in Table 3.

(Comparative Examples 8 and 9)

3,000 ppm of carbon black (manufactured by Mitsubishi Chemical Corporation) was further added to each of the compositions of Comparative Examples 1 and 4, and a specimen was prepared and subjected to a scratch test, thereby evaluating scratch whitening resistance by visual inspection in the same manner as in Example 6. Furthermore, a hue was evaluated by visual inspection. The evaluation results are shown in Table 3.
Table 3

|  | Example 6 | Example 7 | Compative Example8 | Comparative Example 9 |
|---|---|---|---|---|
| Hue (visual inspection) | O Jet black | O Jet black | × Color irregularity occurred. whitish black | × Color irregularity occurred. whitish black |
| Scratch test Scratch whitening resistance (visual inspection) | O Whitening was not observed. | O Whitening was not observed. | × Remarkable whitening was observed. | Δ Whitening was not observed |

[Industrial Applicability]

Since the polycarbonate resin composition of the present invention is excellent in fluidity and chemical resistance and also excellent in impact resistance and bending strength, it is useful as a housing for automobile parts, electronic instruments or information instruments, or the like.

**Claims**

1. A polycarbonate resin composition comprising a melt kneaded mixture containing a resin component comprising (A) from 50 to 94 % by mass of an aromatic polycarbonate resin having a viscosity average molecular weight of from 16,000 to 26,000, (B) from 1 to 15 % by mass of a polyolefin-based resin and/or a polyolefin-based elastomer containing from 3 to 30% by mass of an epoxy group or a glycidyl group and (C) from 5 to 40 % by mass of a polypropylene-based resin produced by a slurry polymerization method; and (D) from 0.001 to 1 part by mass, based on 100 parts by mass of the resin component, of at least one member selected from the group consisting of an aliphatic amine salt, an aromatic amine salt, an ammonium hydroxide and a hydroxylammonium salt.

2. The polycarbonate resin composition according to claim 1, wherein a melt index of the component (C) is from 2 to 40 g/10 min.

3. A molded body obtained by injection molding the polycarbonate resin composition according to claim 1 or 2.

4. The molded body according to claim 3, which is useful for automobile parts.

<table>
<tr><td colspan="2" align="center">**INTERNATIONAL SEARCH REPORT**</td><td>International application No.<br>PCT/JP2009/060639</td></tr>
</table>

A. CLASSIFICATION OF SUBJECT MATTER
C08L69/00(2006.01)i, C08K5/17(2006.01)i, C08L23/00(2006.01)i, C08L23/10
(2006.01)i

According to International Patent Classification (IPC) or to both national classification and IPC

B. FIELDS SEARCHED

Minimum documentation searched (classification system followed by classification symbols)
C08L69/00, C08K5/17, C08L23/00, C08L23/10

Documentation searched other than minimum documentation to the extent that such documents are included in the fields searched

| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-083195 A (Idemitsu Kosan Co., Ltd.),<br>30 March, 2006 (30.03.06),<br>Claims<br>(Family: none) | 1-4 |
| A | JP 08-157664 A (Kawasaki Steel Corp.),<br>18 June, 1996 (18.06.96),<br>Claims<br>& US 5594062 A          & EP 673949 A1<br>& DE 69511446 T          & CA 2144587 A<br>& KR 10-0244882 B | 1-4 |
| A | JP 06-220262 A (Nippon Steel Chemical Co.,<br>Ltd.),<br>09 August, 1994 (09.08.94),<br>Claims<br>(Family: none) | 1-4 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>27 August, 2009 (27.08.09) | Date of mailing of the international search report<br>08 September, 2009 (08.09.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 292 694 A1**

**REFERENCES CITED IN THE DESCRIPTION**

**Patent documents cited in the description**

- JP 7207078 A
- JP 63215749 A
- JP 8019297 B
- JP 2000017120 A
- JP 3007758 A
- JP 3294333 A